# EUROPÄISCHE PATENTSCHRIFT

(11) **EP 2 640 784 B1**
(45) Veröffentlichungstag und Bekanntmachung des Hinweises auf die Patenterteilung: **07.10.2015**
(21) Anmeldenummer: 11782151.2
(22) Anmeldetag: 15.11.2011
(51) Int. Cl.: C08L 77/02, C08L 25/12, C08K 7/14, C08L 25/08, C08L 33/08, C08L 55/02, C08K 5/1539

(54) **THERMOPLASTISCHE FORMMASSEN AUF BASIS VON STYROLCOPOLYMEREN UND POLYAMIDEN; VERFAHREN ZU DEREN HERSTELLUNG UND DEREN VERWENDUNG**
THERMOPLASTIC MOLDING COMPOUNDS BASED ON STYRENE COPOLYMERS AND POLYAMIDES, METHOD FOR PRODUCING SAME AND USE THEREOF
MATIÈRES DE MOULAGE THERMOPLASTIQUES À BASE DE COPOLYMÈRES DE STYRÈNE ET DE POLYAMIDES, LEURS PROCÉDÉS DE FABRICATION ET LEUR UTILISATION

(30) Priorität: 18.11.2010 EP 10191619
(43) Veröffentlichungstag der Anmeldung: 25.09.2013
(73) Patentinhaber: Styrolution Europe GmbH, 60325 Frankfurt am Main (DE)
(72) Erfinder: WEBER, Martin, 67487 Maikammer (DE); BLINZLER, Marko, 68163 Mannheim (DE)
(74) Vertreter: Jacobi, Markus Alexander
(86) Internationale Anmeldenummer: PCT/EP2011/070117
(87) Internationale Veröffentlichungsnummer: WO 2012/065977

(56) Entgegenhaltungen:
- EP-A1- 2 251 377
- WO-A1-2008/101888
- WO-A1-2010/089245
- WO-A1-2010/089258

## Beschreibung

Die vorliegende Erfindung betrifft thermoplastische Formmassen enthaltend Styrolcopolymer, Polyamid, Pfropfkautschuk, Verträglichkeitsvermittler und Fließverbesserer auf Basis von Acrylaten, Verfahren zu deren Herstellung, thermoplastische Formmassen, die nach diesen Verfahren erhältlich sind, die Verwendung dieser thermoplastischen Formmassen sowie Formkörper, Fasern und Folien, die diese thermoplastischen Formmassen enthalten.

Polymere Blends aus (Methyl)Styrol-Acrylnitril-Copolymeren und Polyamiden sind an sich bekannt. Binäre Blends aus diesen Polymerkomponenten weisen aufgrund der Unverträglichkeit zwischen Polyamid und beispielsweise Styrol-Acrylnitril-Copolymer sehr schlechte Zähigkeiten auf. Durch Einsatz von Verträglichkeitsvermittlern kann die Zähigkeit der Blends, aber auch deren Chemikalienresistenz, signifikant verbessert werden, wie beispielsweise beschrieben in EP-A 202 214, EP-A402 528 und EP-A 784 080. Die Mischreihenfolge der Polymerkomponenten und Verträglichkeitsvermittler bei der Herstellung der Blends aus (Methyl)Styrol-Acrylnitril-Copolymeren und Polyamiden wird in den genannten Schriften als grundsätzlich beliebig beschrieben, in der Regel werden alle Komponenten gemeinsam einer Mischvorrichtung zugeführt, d.h. in einem einzigen Verfahrensschritt zeitgleich miteinander schmelzevermischt. Als Verträglichkeitsvermittler eignen sich vor allem Styrol-Acrylnitril-Maleinsäureanhydrid-Terpolymere, Styrol-N-Phenylmaleinimid-Maleinsäureanhydrid-Terpolymere und Methylmethacrylat-Maleinsäureanhydrid-Copolymere. Es wird davon ausgegangen, dass die Amino- bzw. Carboxyl-Endgruppen der Polyamide mit den funktionellen Gruppen der genannten Co- und Terpolymere reagieren, wobei in situ Copolymere entstehen, welche die Verträglichkeit zwischen der Styrolcopolymerphase und der Polyamidphase herstellen.

In WO 2008/101888 werden Formmassen auf Basis von Polyamiden, Styrolpolymeren und Terpolymeren beschrieben, wobei jedoch nicht auf die Fließverbesserer hingewiesen wird. In EP-A 2251377 werden Formmassen aus SAN-Copolymeren, Glasfasern und einem Fließverbesserer vorgestellt, jedoch werden keine Polyamid-ABS-Zusammensetzungen mit Verträglichkeitsvermittlern beschrieben.

Bestrebungen das Gewicht von Kunststoffbauteilen (insbesondere im Fahrzeugbau) zu reduzieren, die keine strukturelle Funktion haben, ist z.B. durch Absenkung der Wandstärke möglich. Wie dem Fachmann bekannt ist, führt jedoch eine Reduktion der Wandstärke beim Spritzgießen zu einem Anstieg des Fülldrucks und zu einer Abnahme des Fließwegs

Daher lag der vorliegenden Erfindung als eine Aufgabe zugrunde, die Fließfähigkeit thermoplastischer Formmassen zu verbessern.

Demgemäß wurden neue und verbesserte thermoplastische Formmassen gefunden, welche enthalten:
a) 3 bis 91,8 Gew.-% eines oder mehrerer Styrolcopolymere als Komponente A,
b) 3 bis 91 Gew.-% eines oder mehrerer Polyamide als Komponente B,
c) 5 bis 50 Gew.-% eines oder mehrerer Pfropfkautschuke als Komponente C,
d) 0,1 bis 25 Gew.-% eines oder mehrerer Verträglichkeitsvermittler als Komponente D und
e) 0,1 bis 5 Gew.-% eines Fließverbesserers auf Basis von Acrylaten als Komponente E,

wobei die Gew.-% jeweils auf das Gesamtgewicht der Komponenten A bis E bezogen sind und zusammen 100 Gew.-% ergeben. Die Erfindung betrifft auch Verfahren zu deren Herstellung, thermoplastische Formmassen, die nach diesen Verfahren erhältlich sind, die Verwendung dieser thermoplastischen Formmassen sowie Formkörper, Fasern und Folien, die diese thermoplastischen Formmassen enthalten.

In einer besonders bevorzugten Ausführungsform enthalten die thermoplastischen Formmassen:
a) 3 bis 91,8 Gew.-% eines oder mehrerer Styrolcopolymere als Komponente A,
b) 3 bis 91 Gew.-% eines oder mehrerer Polyamide als Komponente B,
c) 5 bis 50 Gew.-% eines oder mehrerer Pfropfkautschuke als Komponente C,
d) 0,1 bis 25 Gew.-% eines oder mehrerer Verträglichkeitsvermittler als Komponente D,
e) 0,1 bis 5 Gew.-% eines Fließverbesserers auf Basis von Acrylaten als Komponente E,
f) 0 bis 3 Gew.-% niedermolekulare Anhydride als Komponente F,
g) 0 bis 40 Gew.-% weiterer Kautschuke als Komponente G,
h) 0 bis 50 Gew.-% faser- oder teilchenförmigen Füllstoffs oder deren Mischungen als Komponente H,
j) 0 bis 40 Gew.-% weiterer Zusätze als Komponente J,
wobei die Gew.-% jeweils auf das Gesamtgewicht der Komponenten A bis J bezogen sind und zusammen 100 Gew.-% ergeben.

Die thermoplastischen Formmassen enthalten in einer weiteren Ausführungsform:
a) 12 bis 50 Gew.-% eines oder mehrerer Styrolcopolymere als Komponente A,
b) 30 bis 60 Gew.-% eines oder mehrerer Polyamide als Komponente B,
c) 10 bis 40 Gew.-% eines oder mehrerer Pfropfkautschuke als Komponente C,
d) 0,1 bis 25 Gew.-% eines oder mehrerer Verträglichkeitsvermittler als Komponente D und
e) 0,2 bis 4 Gew.-% eines Fließverbesserers auf Basis von Acrylaten als Komponente E,
wobei die Gew.-% jeweils auf das Gesamtgewicht der Komponenten A bis E bezogen sind und zusammen 100 Gew.-% ergeben. Oftmals sind auch z. B. 0,02 bis 2 Gew.-% mindestens eines niedermolekularen Anhydrids (z.B. Phthalsäureanhydrid) als Komponente F in den Formmassen enthalten.

Gegenstand der Erfindung sind auch thermoplastische Formmassen enthaltend:
a) 12 bis 50 Gew.-% eines oder mehrerer Styrolcopolymere als Komponente A,
b) 30 bis 60 Gew.-% eines oder mehrerer Polyamide als Komponente B,
c) 10 bis 40 Gew.-% eines oder mehrerer Pfropfkautschuke als Komponente C,
d) 0,1 bis 25 Gew.-% eines oder mehrerer Verträglichkeitsvermittler als Komponente D
e) 0,2 bis 4 Gew.-% eines Fließverbesserers auf Basis von Acrylaten als Komponente E,
f) 0,02 bis 2 Gew.-% mindestens eines niedermolekularen Anhydrids als Komponente F,
wobei die Gew.-% jeweils auf das Gesamtgewicht der Komponenten A bis F bezogen sind und zusammen 100 Gew.-% ergeben.

Die Erfindung betrifft auch thermoplastische Formmassen enthaltend (oder bestehend aus):
a) als Styrolcopolymer (Komponente A) ein Styrol-Acrylnitril-Copolymer,
b) als Polyamid (Komponente B) ein Polyamid 6,
c) als Pfropfkautschuk (Komponente C) ein Pfropfcopolymer mit Polybutadien-Kern und Styrol-Acrylnitril-Pfropfhülle,
d) als Verträglichkeitsvermittler (Komponente D) ein Styrol-Acrylnitril-Maleinsäureanhydrid-Terpolymer,
e) als Fließverbesserer auf Basis von Acrylaten (Komponente E) ein Poly-n-Butylacrylat-Oligomer, sowie ggf.
f) als niedermolekulares Anhydrid (Komponente F) Phthalsäureanhydrid.

Die Erfindung betrifft auch Verfahren zu deren Herstellung der thermoplastischen Formmassen, die Verwendung dieser thermoplastischen Formmassen sowie Formkörper, Fasern und Folien, die diese thermoplastischen Formmassen enthalten bzw. aus diesen bestehen.

Die einzelnen Komponenten werden nachfolgend erläutert:

### Komponente A

Als erste Komponente A enthalten die erfindungsgemäßen thermoplastischen Formmassen 3 bis 91,8 Gew.-%, insbesondere 10 bis 60 Gew.-%, bevorzugt 12 bis 50 Gew.-%, mindestens eines Styrolcopolymeren A, wobei dieses Styrol-Copolymer A bevorzugt aus zwei oder mehreren Monomeren aus der Gruppe Styrol, Acrylnitril, Methylstyrol und Methylmethacrylat aufgebaut ist. Als Styrolcopolymere können insbesondere SAN oder andere kautschukfreie Styrolcopolymere verstanden werden. Beispiele für die Komponente A sind gängige Copolymermatrices wie z. B. durch Massepolymerisation, Emulsions- oder Lösungsmittelpolymerisation hergestellte Styrol-Acrylnitril-Copolymere. Auch Mischungen von Matrices sind geeignet, beispielsweise wie in Ullmann's Encyclopedia of Industrial Chemistry (VCH-Verlag, 5. Ausgabe, 1992, S. 633 f.) beschrieben.

In einer weiteren Ausführungsform der Erfindung wird eine Formmasse hergestellt, die eines oder mehrere Styrolcopolymere A enthält, wobei dieses Styrol-Copolymer A aus zwei oder drei Monomeren aus der Gruppe Styrol, Acrylnitril und/oder α-Methylstyrol aufgebaut ist. Die Copolymer-Matrix A wird vorzugsweise aus den Komponenten Acrylnitril und Styrol und/oder α-Methylstyrol durch Massepolymerisation oder in Gegenwart eines oder mehrerer Lösungsmittel hergestellt. Bevorzugt sind dabei Copolymere A mit Molmassen Mw von 15.000 bis 300.000 g/mol, wobei die Molmassen z. B. durch Lichtstreuung in Tetrahydrofuran bestimmt werden können (GPC mit UV-Detektion).

Die Copolymer-Matrix A kann z. B. enthalten:
(Aₐ) Polystyrolacrylnitril, hergestellt aus, bezogen auf (Aₐ), 60 bis 85 Gew.-% Styrol und 15 bis 40 Gew.-% Acrylnitril, oder
(A_{b}) Poly-α-Methylstyrolacrylnitril, hergestellt aus, bezogen auf (A_{b}), 60 bis 85 Gew.% α-Methylstyrol und 15 bis 40 Gew.-% Acrylnitril, oder
(A_{c}) eine Mischung der Copolymer-Matrix (Aₐ) und der Copolymer-Matrix (A_{b}).

Die Copolymer-Matrix A kann auch durch Copolymerisation von Acrylnitril, Styrol und α-Methylstyrol gewonnen werden.

Das zahlengemittelte Molekulargewicht (Mn) der Copolymer-Matrix A beträgt vorzugsweise von 15.000 bis 150.000 g/mol (bestimmt mittels GPC mit UV-Detektion).

Die Viskosität (VZ) der copolymeren Matrix A beträgt (gemessen nach DIN 53726 bei 25°C in einer 0,5 gew.-%igen Lösung in DMF) z. B. von 50 bis 120 ml/g. Durch Massepolymerisation bzw. Lösungspolymerisation in z.B. Toluol oder Ethylbenzol kann die Copolymer-Matrix A hergestellt werden nach einem Verfahren, wie es beispielsweise im Kunststoff-Handbuch, Vieweg-Daumiller, Band V, (Polystyrol), Carl-Hanser-Verlag, München 1969, Seiten 122f., Zeilen 12 ff. beschrieben wird.

### Komponente B

Die erfindungsgemäße Formmasse enthält ferner 3 bis 91 Gew.-%, bevorzugt von 30 bis 80 Gew.-%, insbesondere von 30 bis 60 Gew.%, eines oder mehrerer Polyamide B, wobei es sich um Homopolyamide, Copolyamide oder Mischungen daraus handeln kann.

Die Polyamide der erfindungsgemäßen Formmassen weisen im allgemeinen eine Viskositätszahl von 70 bis 350, vorzugsweise 70 bis 170 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den Patentschriften US 2 071 250, US 2 071 251, US 2 130 523, US 2 130 948, US 2 241 322, US 2 312 966, US 2 512 606 und US 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 4 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 4 bis 12, insbesondere 6 bis B Kohlenstoffatomen sowie m-Xylylendiamin, Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP-A 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 038 094, EP-A 038 582 und EP-A 039 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und EP-A 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

### AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | Nonyldiamin/Terephthalsäure |
| PA MXD6 | m-Xylylendiamin, Adipinsäure |

| | |
|---|---|
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure. |

Als Komponente B können die erfindungsgemäßen thermoplastischen Formmassen eines oder mehrere Polyamide mit, bezogen auf die gesamte Komponente B, 0,1 - 0,2 Gew.-% Triacetondiamin (TAD)-Endgruppen enthalten.

Dabei kann es sich auch um Mischungen von Polyamiden mit TAD-Endgruppen mit Polyamiden ohne TAD-Endgruppen handeln. Wichtig ist, dass insgesamt auf die Komponente B bezogen 0,1 - 0,2 Gew.-% Triacetondiamin-Endgruppen vorliegen. Bevorzugt liegen 0,14 - 0,18 Gew.-% TAD-Endgruppen vor, insbesondere 0,15 - 0,17 Gew.-% TAD-Endgruppen.

### Komponente C

Die erfindungsgemäße Formmasse enthält ferner 5 bis 50 Gew.-%, bevorzugt 10 bis 40 Gew.-% eines oder mehrerer Pfropfpolymerisate C.

Unter Pfropfkautschuken im Sinne der Erfindung werden Kern-Schale-Kautschuke verstanden, die auch mehrschalig aufgebaut sein können. Bevorzugt werden Pfropfkautschuke, die als Kern eine Komponente mit einer Tg von weniger als (-20)°C, vorzugsweise weniger als (-40)°C aufweisen. Geeignet sind Kautschuke auf Dien-, Acrylat-, Siloxan- und EPDM-Basis.

Die Pfropfhülle besteht vorzugsweise aus Styrol und Acrylnitril (z,B. SAN) und/oder anderen copolymerisierbaren Monomeren. Das Verhältnis von Hart- zu Weichphase liegt zwischen 10 zu 90 und 70 zu 30 Gewichtsteilen.

Bei der Polymerisation der Hartphase entstehen auch untergeordnete Mengen ungepfropfter Anteile. Diese werden der Hartphase zugerechnet.

Es können auch Mischungen verschiedener Kautschuke verwendet werden. Das Mischungsverhältnis der zwei verschiedenen Kautschuke soll 10 zu 90 bis 90 zu 10 betragen. Dabei ist es bevorzugt, wenn sich die verwendeten Kautschuke bezüglich ihrem Weichphasenanteil um mindestens 5 Gew.-% unterscheiden.

Dieses Pfropfpolymerisat C ist vorzugsweise aus einer Pfropfgrundlage und mindestens einer Pfropfauflage aufgebaut. Das Pfropfpolymerisat C ist z. B. aus zwei oder mehreren Monomeren aus der Gruppe Butadien, Styrol, Acrylnitril, α-Methylstyrol, Methylmethacrylat, Ethylacrylat und/oder Methylacrylamid aufgebaut. Zur Erläuterung des Pfropfpolymerisats C und seiner Herstellung wird auf die Beschreibung in Ullmann's Encyclopedia of Industrial Chemistry 5. Auflage, VCH, 1992, Seiten 633f. verwiesen. Bevorzugter Weise enthält die Formmasse 10 bis 40 Gew.-% eines oder mehrerer Pfropfpolymerisate C, wobei dieses Pfropfpolymerisat C aus einer Pfropfgrundlage aus Polybutadien (oder zum Beispiel einem Butadien-enthaltenden Copolymer) und mindestens einer Pfropfauflage aufgebaut ist.

Die Pfropfauflage ist vorzugsweise aus zwei oder mehreren Monomeren aus der Gruppe Styrol, Acrylnitril, α-Methylstyrol, Ethylacrylat und/oder Methylacrylamid aufgebaut. Auf die Komponente C und deren Herstellung wird später genauer eingegangen.

Als Kautschuke C sind im Rahmen der vorliegenden Erfindung insbesondere solche geeignet, die
- einen Dienkautschuk auf Basis von Dienen, wie z. B. Butadien oder Isopren,
- einen Alkylacrylatkautschuk auf Basis von Alkylestern der Acrylsäure, wie n-Butylacrylat und 2-Ethylhexylacrylat,
- einen EPDM-Kautschuk auf Basis von Ethylen, Propylen und einem Dien,
- einen Siliconkautschuk auf Basis von Polyorganosiloxanen,
oder Mischungen dieser Kautschuke bzw. Kautschukmonomeren enthalten.

Besonders bevorzugt ist als Kautschuk C ein Pfropfpolymerisat aus einer Pfropfgrundlage, insbesondere einer vernetzten Dien- oder Alkylacrylatpfropfgrundlage, und einer oder mehrerer Pfropfhüllen, insbesondere einer oder mehrerer Styrol-, Acrylnitril- oder Methylmethacrylat-Pfropfhüllen.

Verfahren zur Herstellung der kautschukelastischen Polymerisate sind dem Fachmann bekannt und in der Literatur beschrieben.

### Komponente D

Als Komponente D enthalten die erfindungsgemäßen Formmassen 0,1 bis 25 Gew.-% an Verträglichkeitsvermittler, insbesondere Terpolymer auf Basis Styrol, Acrylnitril und Maleinsäureanhydrid sowie thermoplastische Polymeren mit polaren Gruppen. Es kommen vorzugsweise Polymere zum Einsatz, die
C.1 ein vinylaromatisches Monomer,
C.2 wenigstens ein Monomer ausgewählt aus der Gruppe C₂- bis C₁₂-Alkylmethacrylate, C₂-bis C₁₂-Alkylacrylate, Methacrylnitrile und Acrylnitrile und
C.3 α, ß-ungesättigte Komponenten enthaltend Dicarbonsäureanhydride enthalten.

Als vinylaromatische Monomere C.1 ist Styrol besonders bevorzugt. Für die Komponente C.2 ist Acrylnitril besonders bevorzugt. Für α, ß-ungesättigte Komponenten enthaltend Dicarbonsäureanhydride und für C.3 ist besonders bevorzugt Maleinsäureanhydrid. Vorzugsweise werden als Komponente C.1, C.2 und C.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Schlagzähigkeit bei.

Die Menge an Maleinsäureanhydrid im dem Terpolymer kann in weiten Grenzen schwanken und beträgt in der Regel 0,2 bis 4 Gew.-% Mol-%, bevorzugt 0,4 bis 3 Gew.-%, besonders bevorzugt 0,8 und 2,3 Gew.-% in der Komponente C.1. In diesem Bereich werden besonders gute mechanische Eigenschaften bezüglich Zugfestigkeit und Schlagzähigkeit erzielt.

Das Terpolymer kann in an sich bekannter Weise hergestellt werden. Eine geeignete Methode ist das Lösen der Monomerkomponenten des Terpolymers, z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Geeignete Initiatoren sind z. B. Peroxide. Sodann wird das Gemisch für mehrere Stunden bei erhöhter Temperatur polymerisiert. Anschließend werden das Lösemittel und die nicht umgesetzten Monomere in an sich bekannter Weise entfernt. Das Verhältnis zwischen der Komponente C.1 (vinylaromatisches Monomer) und der Komponente C.2, z. B. dem Acrylnitrilmonomer in dem Terpolymer liegt vorzugsweise zwischen 80 : 20 und 50: 50.

Um die Mischbarkeit des Terpolymers mit dem Pfropfcopolymer C zu verbessern wird vorzugsweise eine Menge an vinylaromatischen Monomer C.1 ausgewählt, die der Menge des Vinylmonomeren in dem Styrolcopolymer A entspricht. Die Menge der Komponente D in den erfindungsgemäßen Polymerblends liegt zwischen 0,1 und 25 Gew.-%, vorzugsweise zwischen 1 und 20 Gew.-%, besonders bevorzugt zwischen 2 und 10 Gew.-%. Höchst bevorzugt sind Mengen zwischen 3 und 7 Gew.-%.

Die Copolymere haben im allgemeinen Molekulargewichte M_{w} im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

Ferner können auch Styrol-N-Phenylmaleinimid-Maleinsäureanhydrid-Terpolymere eingesetzt werden.

### Komponente E

Als Komponente E enthalten die erfindungsgemäßen thermoplastischen Formmassen 0,1 bis 5 Gew.-%, bevorzugt 0,2 bis 4 Gew.-%, besonders bevorzugt 0,3 bis 4 Gew.-% Fließverbesserer auf Basis von Acrylaten.

Es werden bevorzugt Alkylacrylat-Oligomere mit einem Gewichtsmittel des Molekulargewichts im Bereich von 1.200 bis 4.000 g/mol, vorzugsweise 1.500 bis 2.000 g/mol eingesetzt. Das Molekulargewicht wird dabei mittels Gelpermeationschromatographie bestimmt, wobei als Elutionsmittel bevorzugt THF verwendet wird. Die Eichung erfolgt mit Polystyrol-Standards. Die Alkylacrylate sind bevorzugt C₁₋₁₂ -Alkylacrylate, insbesondere C₄₋₈-Alkylacrylate.
Besonders bevorzugt werden Butylacrylate oder Ethylhexylacrylate eingesetzt, speziell bevorzugt n-Butylacrylat. Die Herstellung der Alkylacrylat-Oligomere erfolgt nach den bekannten Verfahren der Polymerisation. Die Herstellung der Polybutylacrylate erfolgt vorzugsweise durch radikalische Polymerisation, wobei als Initiatoren Azo- oder Peroxidverbindungen verwendet werden können. Die Herstellung solcher Verbindungen ist z. B. beschrieben in "Encyclopedia of Polymer Science and Engineering, H. F. Mark (Ed.) J. Wiley & Sons, New York, 1985, Seiten 265 ff., Verfahren zur Herstellung sind ebenfalls im gleichen Dokument ab Seite 269ff beschrieben. Die Polybutylacrylate können bis 40 Gew.-%, bevorzugt bis 20 Gew.-% eines oder mehrerer copolymerisierbare Monomere enthalten. Bevorzugte Comonomere sind ausgewählt aus der Gruppe bestehend aus Acrylaten, Methacrylaten, Styrol oder dessen Derivaten, Maleinsäureanhydrid, Acrylnitril und Mischungen davon.

Bevorzugt werden Polybutylacrylate verwendet, die bei Raumtemperatur flüssig sind.

### Komponente F

Als weitere Komponente (F) können die erfindungsgemäßen Formmassen mindestens ein Dicarbonsäureanhydrid aufweisen, worunter eine niedermolekulare Verbindung zu verstehen ist, die nur eine Dicarbonsäureanhydridgruppe aufweist. Es können aber auch zwei oder mehr dieser Verbindungen als Komponente F verwendet werden. Dicarbonsäureanhydride gemäß der vorliegenden Erfindung sind monofunktionell, das heißt, sie reagieren mit den Polyamidketten der Komponente B, insbesondere mit der Anhydridfunktion der entsprechenden Verbindungen. Das Molgewicht dieser Verbindung ist im Allgemeinen kleiner als 3000 g/mol, vorzugsweise kleiner als 1500 g/mol. Diese Verbindungen können neben der Dicarbonsäureanhydridgruppe weitere funktionelle Gruppen enthalten, die mit den Endgruppen der Polyamide reagieren können, aber in ihrer Reaktivität (viel) niedriger sind als die Anhydridfunktion. Geeignete Verbindungen F) sind z.B. C₄-C₁₀-Alkyldicarbonsäureanhydride, beispielsweise Bernsteinsäureanhydrid, Glutarsäureanhydrid, Adipinsäureanhydrid. Ferner kommen cycloaliphatische Dicarbonsäureanhydride wie 1,2-Cyclohexandicarbonsäureanhydrid in Betracht. Darüber hinaus können aber auch Dicarbonsäureanhydride, die ethylenisch ungesättigte oder aromatische Verbindungen sind, eingesetzt werden, z.B. Maleinsäureanhydrid, Phthalsäureanhydrid oder Trimellitsäureanhydrid. Bevorzugt ist die Verwendung von Phthalsäureanhydrid.

Der Anteil der Komponente F beträgt im Allgemeinen von 0 bis 3 Gew.-% und sofern Komponente F in den erfindungsgemäßen thermoplastischen Formmassen enthalten ist, bevorzugt von 0,02 bis 2 Gew.-%, bezogen auf das Gesamtgewicht der Komponenten A bis G.

### Komponente G

Als Komponente G enthalten die thermoplastischen Formmassen 0 bis 40 Gew.-%, bevorzugt 0 bis 25 Gew.-%, besonders bevorzugt 0 bis 15 Gew.-% schlagzähmodifizierende Kautschuke. Es können dabei übliche Schlagzähmodifier verwendet werden, die für Polyamide geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10 °C, vorzugsweise von weniger als -30 °C aufweist, und sie enthalten mindestens eine funktionelle Gruppe, die mit dem Polyamid wechselwirken kann. Geeignete funkionelle Gruppen sind beispielsweise Carbonsäure-, Carbonsäureanhydrid-, Carbonsäureester-, Carbonsäureamid-, Carbonsäureimid-, Amino-, Hydroxyl-, Expoxy-, Urethan- und Oxazolingruppen.

Als Kautschuke, die die Zähigkeit der Blends erhöhen, seien z. B. folgende genannt:
Olefinkautschuke, z.B. EP-, EPDM-, EB- bzw. EO-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Weiterhin können funktionalisierte SBS- oder SEBS-Kautschuke verwendet werden, z.B. Kraton®1901 FX.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozess bei einem Druck von 400 bis 4.500 bar oder durch Pfropfen der Comonomeren auf das Poly-α-Olefin hergestellt werden. Der Anteil des α-Olefins an dem Copolymeren liegt i. a. im Bereich von 99,95 bis 55 Gew.-%.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z. B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Es können auch Mischungen verschiedener Kautschuke eingesetzt werden.

### Komponente H

Als Komponente H können die erfindungsgemäßen thermoplastischen Formmassen diese Komponente in einer Menge von 0 bis 50 Gew.-%, vorzugsweise 1 bis 20 Gew.-%, insbesondere 10 bis 17,5 Gew.-% enthalten. Als teilchenförmige mineralische Füllstoffe H eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit. Talkum, Chlorit, Phlogophit, Feldspat, Calciumsilikate wie Wollastonit, oder Kaolin, besonders kalzinierter Kaolin. Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis vorzugsweise im Bereich von 1 bis 25, bevorzugt im Bereich von 2 bis 25 liegt, bestimmt am fertigen Produkt, d.h. in der Regel einem Spritzgußformteil.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, der weniger als 40 µm beträgt, kann auch mittels Siebanalyse gemessen werden. Das Aspektverhältnis ist das Verhältnis von Teilchendurchmesser zu Dicke (größter Ausdehnung zu kleinster Ausdehnung). Besonders bevorzugt werden als teilchenformige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt.

Als Komponente H werden faserförmige Füllstoffe wie Kohlenstofffasern, Kallumtitanat-Whisker, Aramidfasern oder bevorzugt Glasfasern eingesetzt, wobei mindestens 50 Gew.-% der faserförmigen Füllstoffe (Glasfasern) eine Länge von mehr als 50 µm aufweisen. Die verwendeten (Glas)fasern können vorzugsweise einen Durchmesser von bis zu 25 µm, besonders bevorzugt 5 bis 13 µm aufweisen. Vorzugsweise weisen mindestens 70 Gew.-% der Glasfasern eine Länge von mehr als 60 µm auf. Besonders bevorzugt beträgt im fertigen Formteil die mittlere Länge der Glasfasern 0,08 bis 0,5 mm.
Die Länge der Glasfasern bezieht sich auf ein fertiges Formteil, das beispielsweise nach dem Spritzgießen erhalten wird. Dabei können die Glasfasern den Formmassen bereits in der entsprechend abgelängten Form oder auch in Form von Endlossträngen (Rovings) zugesetzt werden.

### Komponente J

Als Komponente J können die erfindungsgemäßen thermoplastischen Formmassen mit dieser Komponente in Mengen von 0 bis 40 Gew.-%, vorzugsweise 0 bis 20, Gew.-% insbesondere 0 (bei Vorliegen 0,4) bis 10 Gew.-% eingesetzt werden. Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen 0 bis 40 Gew.-%, vorzugsweise 0 bis 20 Gew.-%, insbesondere 0 (bei Vorliegen 0,2) bis 10 Gew.-%, bezogen auf das Gesamtgewicht der Zusammensetzung. Pigmente und Farbstoffe sind allgemein in Mengen von 0 bis 4 Gew.-%, bevorzugt 0 bis 3,5 Gew.-% und insbesondere 0 (bei Vorliegen 0,5) bis 3 Gew.-% enthalten. Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃.Pb(OH)₂), Lithopone, Antimonweiß und Titandioxid.

Von den beiden gebräuchlichen Kristallmodifikationen (Rutil- und AnatasTyp) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe304), Spinellschwarz (Cu(Cr, Fe)204), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich. Weiterhin kann es von Vorteil sein, die genannten Pigmente bzw. Farbstoffe in Mischung einzusetzen, z.B. Ruß mit Kupferphthalocyaninen, da allgemein die Farbdispergierung in dem Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche n-Liganden enthalten.
Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und - amide sowie Ester des Pentaerythrits mit langkettigen Fettsäuren. Es können auch Salze des Calciums, Zinks oder Aluminiums der Stearinsäure sowie Dialkylketone, z.B. Distearylkelon, eingesetzt werden. Weiterhin können auch Ethylenoxid-Propylenoxid-Copolymere als Gleit- und Entformungsmittel verwendet werden.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der beispielsweise trockenen Komponenten A bis D und gegebenenfalls E bis J kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wäßrigen Dispersion isoliert worden sind. Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern. Die erfindungsgemäßen Formmassen können zur Herstellung von Folien, Fasern und Formkörpern eingesetzt werden. Zudem können sie besonders bevorzugt zur Herstellung von Karosserieteilen im Automobilsektor, insbesondere zur Herstellung von großflächigen Automobilaußenteilen eingesetzt werden.

Die Erfindung betrifft auch entsprechende Formkörper, Fasern oder Folien.

Die nachfolgenden Beispiele und Ansprüche illustrieren die Erfindung.

### Meßmethoden

Die Viskositätszahlen VZ der (Methyl)Styrol-Acrylnitril-Copolymere und Verträglichkeitsvermittler wurden nach DIN 53726 an 0,5 gew.-%iger Dimethylformamid-Lösung bei 25 °C bestimmt.

Die Viskositätszahlen VZ der Polyamide wurden nach ISO 307 an 0,5 gew.-%iger Lösung in konzentrierter Schwefelsäure (96 Gew.-% H₂SO₄)) bei 25 °C bestimmt.
Die mittleren Teilchengrößen der als Kautschuke eingesetzten Pfropfcopolymere wurden als Gewichtsmittel der Teilchengrößen mittels einer analytischen Ultrazentrifuge entsprechend der Methode von W. Scholtan und H. Lange, Kolloid-Z, und Z.-Polymere 250 (1972), Seiten 782 bis 796, bestimmt.

Die Wärmeformbeständigkeit Vicat B der thermoplastischen Formmassen wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Iso-Stäben ermittelt.

Die Kerbschlagzähigkeit aₖ der thermoplastischen Formmassen bei Raumtemperatur (RT) und - 30°C wurde an ISO-Stäben nach ISO 179 1eA bestimmt.
Die Fließfähigkeit MVI wurde nach ISO 1133 bei 240 °C und 10 kg Belastung bestimmt. Zugversuche wurden nach ISO 527 an Probekörpern durchgeführt, welche bei 250 und 270°C Masstemperatur hergestellt wurden.

### Herstellung und Prüfung der Formmassen

### Komponente A

Styrol-Acrylnitril-Copolymer mit 75 Gew.-% Styrol und 25 Gew.-% Acrylnitril und einer Viskositätszahl von 80 ml/g (bestimmt in 0,5 Gew.-%-iger DMF-Lösung bei 25°C)

### Komponente B1

Als Polyamid B 1 wurde ein Polyamid 6, erhalten aus ε-Caprolactam, mit einer Viskositätszahl von 150 ml/g (gemessen 0,5 Gew.-%-ig in 96 %-iger Schwefelsäure) verwendet, z.B. Ultramid^{®} B 27E.

### Komponente B2

Als Polyamid B 2 wurde ein Polyamid 6, erhalten aus ε-Caprolactam, mit einer Viskositätszahl von 130 ml/g (gemessen 0,5 Gew.-%-ig in 96 %-iger Schwefelsäure) und einem Anteil von Triacetondiamin von 0,16 Gew.% verwendet.

### Komponente C1

Pfropfkautschuk mit 62 Gew.-% Polybutadien im Kern und 38 Gew.-% einer Pfropfhülle aus 75 Gew.% Styrol und 25 Gew.-% Acrylnitril. Mittlere Teilchengröße ca. 400 nm.

### Komponente C2

Pfropfkautschuk mit 70 Gew.-% Polybutadien im Kern und 30 Gew.-% einer Pfropfhülle aus 75 Gew.% Styrol und 25 Gew.-% Acrylnitril. Mittlere Teilchengröße ca. 370 nm.

### Komponente D

Als Komponente D3 wurde ein Styrol-Acrylnitril-Maleinsäureanhydrid-Terpolymer verwendet, welches eine Zusammensetzung von 74,4/23,5/2,1 (Gew.-%) hatte, Viskositätszahl: 66 ml/g

### Komponente E

Poly-n-Butylacrylat Oligomer mit einem Molgewicht von 1.700 g/mol (bestimmt bei 25°C als Gewichtsmittelwert mittels GPC, THF als Laufmittel, Polystyrol als Standard).

### Komponente F

Als Komponente E wurde Phthalsäureanhydrid verwendet.

### Komponente H

Schnittglasfaser mit Polyurethanschlichte, Faserdurchmesser 14 µm.

### Komponente J

Als Komponente H wurde Irganox® PS 802 (Di-stearyl-dithiopropionat), Fa. Ciba eingesetzt.

### Herstellung der erfindungsgemäßen Formmassen

Die Komponenten wurden in einem Zweiwellenextruder bei einer Massetemperatur von 240 bis 260°C gemischt. Die Schmelze wurde durch ein Wasserbad geleitet und granuliert. Die Ergebnisse der Prüfungen sind in Tabelle 1 aufgeführt.

**Tabelle 1**

| | V1 | V2 | 3 | 4 | 5 | V6 | 7 | 8 | V9 | 9 | 10 |
|---|---|---|---|---|---|---|---|---|---|---|---|
| A | 18,8 | 18,8 | 18,3 | 17,8 | 17,8 | 13,8 | 13,3 | 12,8 | 18,2 | 17,7 | 17,2 |
| B1 | 41 | 41 | 41 | 41 | 41 | - | - | - | - | - | - |
| B2 | - | - | - | - | - | 53 | 53 | 53 | 36,6 | 36,6 | 36,6 |
| C1 | 35 | 28 | 35 | 35 | 28 | 28 | 28 | 23 | 32 | 32 | 32 |
| C2 | - | 7 | - | - | 7 | - | - | 5 | - | - | - |
| D | 4,88 | 4,88 | 4,88 | 4,88 | 4,88 | 5 | 5 | 5 | 5 | 5 | 5 |
| E | - | - | 0,5 | 1 | 0,5 | - | 0,5 | 1 | - | 0,5 | 1 |
| F | 0,12 | 0,12 | 0,12 | 0,12 | 0,12 | - | - | - | - | - | - |
| H | - | - | - | - | - | - | - | - | 8 | 8 | 8 |
| J | 0,2 | 0,2 | 0,2 | 0,2 | 0,2 | 0,2 | 0,2 | 0,2 | 0,2 | 0,2 | 0,2 |
| Vicat B [°C] | 103 | 103 | 103 | 102 | 103 | 114 | 114 | 114 | 110 | 110 | 110 |
| MVR [ml/10min] | 14,9 | 17,5 | 20,0 | 24,2 | 23,1 | 29,2 | 37,1 | 44,3 | 32,1 | 36,5 | 43,2 |
| ak, RT [kJ/m²] | 61,1 | 67,4 | 67,1 | 68,1 | 72,1 | 54,3 | 62,5 | 64,2 | 8,3 | 11,2 | 11,7 |
| ak, -30°C [kJ/m²] | 14,2 | 16,9 | 16,4 | 16,5 | 17,9 | 14,4 | 16,9 | 17,0 | - | - | - |
| Reißdehn. [%] | | | | | | | | | | | |
| Tm 250°C | 67 | 87 | 103 | 108 | 125 | 81 | 145 | 151 | 4,5 | 4,8 | 5,4 |
| Tm 270°C | 32 | 34 | 89 | 95 | 114 | 34 | 141 | 135 | 2,9 | 4,1 | 4,4 |

## Patentansprüche

1. Thermoplastische Formmassen, enthaltend:
a) 3 bis 91,8 Gew.-% eines oder mehrerer Styrolcopolymere als Komponente A,
b) 3 bis 91 Gew.-% eines oder mehrerer Polyamide als Komponente B,
c) 5 bis 50 Gew.-% eines oder mehrerer Pfropfkautschuke als Komponente C,
d) 0,1 bis 25 Gew.-% eines oder mehrerer Verträglichkeitsvermittler als Komponente D und
e) 0,1 bis 5 Gew.-% eines Fließverbesserers auf Basis von Acrylaten als Komponente E,
wobei die Gew.-% jeweils auf das Gesamtgewicht der Komponenten A bis E bezogen sind und zusammen 100 Gew.-% ergeben.

2. Thermoplastische Formmassen gemäß Anspruch 1, enthaltend:
a) 12 bis 50 Gew.-% eines oder mehrerer Styrolcopolymere als Komponente A,
b) 30 bis 60 Gew.-% eines oder mehrerer Polyamide als Komponente B,
c) 10 bis 40 Gew.-% eines oder mehrerer Pfropfkautschuke als Komponente C,
d) 0,1 bis 25 Gew.-% eines oder mehrerer Verträglichkeitsvermittler als Komponente D
e) 0,2 bis 4 Gew.-% eines Fließverbesserers auf Basis von Acrylaten als Komponente E,
wobei die Gew.-% jeweils auf das Gesamtgewicht der Komponenten A bis E bezogen sind und zusammen 100 Gew.-% ergeben.

3. Thermoplastische Formmassen gemäß Anspruch 1 oder 2, enthaltend:
a) 12 bis 50 Gew.-% eines oder mehrerer Styrolcopolymere als Komponente A,
b) 30 bis 60 Gew.-% eines oder mehrerer Polyamide als Komponente B,
c) 10 bis 40 Gew.-% eines oder mehrerer Pfropfkautschuke als Komponente C,
d) 0,1 bis 25 Gew.-% eines oder mehrerer Verträglichkeitsvermittler als Komponente D
e) 0,2 bis 4 Gew.-% eines Fließverbesserers auf Basis von Acrylaten als Komponente E,
f) 0,02 bis 2 Gew.-% mindestens eines niedermolekularen Anhydrids als Komponente F,
wobei die Gew.-% jeweils auf das Gesamtgewicht der Komponenten A bis F bezogen sind und zusammen 100 Gew.-% ergeben.

4. Thermoplastische Formmassen gemäß einem der Ansprüche 1 bis 3, enthaltend:
a) als Styrolcopolymer (Komponente A) ein Styrol-Acrylnitril-Copolymer,
b) als Polyamid (Komponente B) ein Polyamid 6,
c) als Pfropfkautschuk (Komponente C) ein Pfropfcopolymer mit Polybutadien-Kern und Styrol-Acrylnitril-Pfropfhülle,
d) als Verträglichkeitsvermittler (Komponente D) ein Styrol-Acrylnitril-Maleinsäureanhydrid-Terpolymer,
e) als Fließverbesserer auf Basis von Acrylaten (Komponente E) ein Poly-n-Butylacrylat-Oligomer, sowie ggf.
f) als niedermolekulares Anhydrid (Komponente F) Phthalsäureanhydrid.

5. Verfahren zur Herstellung von thermoplastischen Formmassen gemäß einem der Ansprüche 1 bis 4, **dadurch gekennzeichnet, dass** man die Komponenten bei 200 bis 320°C mischt und gemeinsam extrudiert, knetet oder verwalzt.

6. Thermoplastische Formmasse, herstellbar nach einem Verfahren gemäß Anspruch 5.

7. Verwendung einer thermoplastischen Formmasse nach einem der Ansprüche 1 bis 4 oder 6 zur Herstellung von Formkörpern, Folien oder Fasern.

8. Formkörper, Fasern oder Folien, enthaltend eine thermoplastische Formmasse gemäß einem der Ansprüche 1 bis 4 oder 6.

## Claims

1. Thermoplastic moulding compositions comprising:
a) from 3 to 91.8% by weight of one or more styrene copolymers as component A,
b) from 3 to 91% by weight of one or more polyamides as component B,
c) from 5 to 50% by weight of one or more graft rubbers as component C,
d) from 0.1 to 25% by weight of one or more compatibilizers as component D, and
e) from 0.1 to 5% by weight of a flow improver based on acrylates as component E,
where each of the % by weight values is based on the total weight of components A to E and these give a total of 100% by weight.

2. Thermoplastic moulding compositions according to Claim 1, comprising:
a) from 12 to 50% by weight of one or more styrene copolymers as component A,
b) from 30 to 60% by weight of one or more polyamides as component B,
c) from 10 to 40% by weight of one or more graft rubbers as component C,
d) from 0.1 to 25% by weight of one or more compatibilizers as component D,
e) from 0.2 to 4% by weight of a flow improver based on acrylates as component E,
where each of the % by weight values is based on the total weight of components A to E and these give a total of 100% by weight.

3. Thermoplastic moulding compositions according to Claim 1 or 2, comprising:
a) from 12 to 50% by weight of one or more styrene copolymers as component A,
b) from 30 to 60% by weight of one or more polyamides as component B,
c) from 10 to 40% by weight of one or more graft rubbers as component C,
d) from 0.1 to 25% by weight of one or more compatibilizers as component D,
e) from 0.2 to 4% by weight of a flow improver based on acrylates as component E,
f) from 0.02 to 2% by weight of at least one low-molecular-weight anhydride as component F,
where each of the % by weight values is based on the total weight of components A to F and these give a total of 100% by weight.

4. Thermoplastic moulding compositions according to one of Claims 1 to 3, comprising:
a) as styrene copolymer (component A) a styrene-acrylonitrile copolymer,
b) as polyamide (component B) a polyamide 6,
c) as graft rubber (component C) a graft copolymer with polybutadiene core and styrene-acrylonitrile graft shell,
d) as compatibilizer (component D) a styrene-acrylonitrile-maleic anhydride terpolymer,
e) as flow improver based on acrylates (component E) a poly-n-butyl acrylate oligomer, and optionally
f) as low-molecular-weight anhydride (component F) phthalic anhydride.

5. Process for producing thermoplastic moulding compositions according to one of Claims 1 to 4, **characterized in that** the components are mixed at from 200 to 320°C and extruded, kneaded, or rolled together.

6. Thermoplastic moulding composition that can be produced by a process according to Claim 5.

7. Use of a thermoplastic moulding composition according to one of Claims 1 to 4 or 6 for producing mouldings, foils, or fibres.

8. Mouldings, fibres, or foils comprising a thermoplastic moulding composition according to one of Claims 1 to 4 or 6.

## Revendications

1. Matériaux de moulage thermoplastiques, contenant :
a) 3 à 91,8 % en poids d'un ou de plusieurs copolymères de styrène en tant que composant A,
b) 3 à 91 % en poids d'un ou de plusieurs polyamides en tant que composant B,
c) 5 à 50 % en poids d'un ou de plusieurs caoutchoucs greffés en tant que composant C,
d) 0,1 à 25 % en poids d'un ou de plusieurs promoteurs de compatibilité en tant que composant D, et
e) 0,1 à 5 % en poids d'un agent d'amélioration de l'écoulement à base d'acrylates en tant que composant E,
les % en poids se rapportant à chaque fois au poids total des composants A à E et leur somme étant de 100 % en poids.

2. Matériaux de moulage thermoplastiques selon la revendication 1, contenant :
a) 12 à 50 % en poids d'un ou de plusieurs copolymères de styrène en tant que composant A,
b) 30 à 60 % en poids d'un ou de plusieurs polyamides en tant que composant B,
c) 10 à 40 % en poids d'un ou de plusieurs caoutchoucs greffés en tant que composant C,
d) 0,1 à 25 % en poids d'un ou de plusieurs promoteurs de compatibilité en tant que composant D,
e) 0,2 à 4 % en poids d'un agent d'amélioration de l'écoulement à base d'acrylates en tant que composant E,
les % en poids se rapportant à chaque fois au poids total des composants A à E et leur somme étant de 100 % en poids.

3. Matériaux de moulage thermoplastiques selon la revendication 1 ou 2, contenant :
a) 12 à 50 % en poids d'un ou de plusieurs copolymères de styrène en tant que composant A,
b) 30 à 60 % en poids d'un ou de plusieurs polyamides en tant que composant B,
c) 10 à 40 % en poids d'un ou de plusieurs caoutchoucs greffés en tant que composant C,
d) 0,1 à 25 % en poids d'un ou de plusieurs promoteurs de compatibilité en tant que composant D,
e) 0,2 à 4 % en poids d'un agent d'amélioration de l'écoulement à base d'acrylates en tant que composant E,
f) 0,02 à 2 % en poids d'au moins un anhydride de faible poids moléculaire en tant que composant F,
les % en poids se rapportant à chaque fois au poids total des composants A à F et leur somme étant de 100 % en poids.

4. Matériaux de moulage thermoplastiques selon l'une quelconque des revendications 1 à 3, contenant :
a) en tant que copolymère de styrène (composant A), un copolymère de styrène-acrylonitrile,
b) en tant que polyamide (composant B), un polyamide 6,
c) en tant que caoutchouc greffé (composant C), un copolymère greffé comprenant un noyau en polybutadiène et une enveloppe de greffage en styrène-acrylonitrile,
d) en tant que promoteur de compatibilité (composant D), un terpolymère styrène-acrylonitrile-anhydride de l'acide maléique,
e) en tant qu'agent d'amélioration de l'écoulement à base d'acrylates (composant E), un oligomère de polyacrylate de n-butyle, ainsi qu'éventuellement,
f) en tant qu'anhydride de faible poids moléculaire (composant F), de l'anhydride de l'acide phtalique.

5. Procédé de fabrication de matériaux de moulage thermoplastiques selon l'une quelconque des revendications 1 à 4, **caractérisé en ce que** les composants sont mélangés à 200 à 320 °C, et extrudés, malaxés ou cylindrés ensemble.

6. Matériau de moulage thermoplastique, pouvant être fabriqué par un procédé selon la revendication 5.

7. Utilisation d'un matériau de moulage thermoplastique selon l'une quelconque des revendications 1 à 4 ou 6 pour la fabrication de corps moulés, de feuilles ou de fibres.

8. Corps moulés, fibres ou feuilles, contenant un matériau de moulage thermoplastique selon l'une quelconque des revendications 1 à 4 ou 6.
